# EUROPÄISCHE PATENTSCHRIFT

(11) **EP 1 486 658 B1**
(45) Veröffentlichungstag und Bekanntmachung des Hinweises auf die Patenterteilung: **28.05.2008**
(21) Anmeldenummer: 04100880.6
(22) Anmeldetag: 04.03.2004
(51) Int. Cl.: F02D 41/22

(54) **Fehlerdiagnoseverfahren und -vorrichtung für ein Kraftfahrzeugsystem**
Fault diagnosis method and apparatus for a motor vehicle system
Procédé et dispositif de diagnostic de fautes pour un système de véhicule automobile

(30) Priorität: 12.06.2003 DE 10326557
(43) Veröffentlichungstag der Anmeldung: 15.12.2004
(73) Patentinhaber: ROBERT BOSCH GMBH, 70442 Stuttgart (DE)
(72) Erfinder: Foerstner, Dirk, 70197 Stuttgart (DE); Weber, Reinhard, 71263 Weil der Stadt (DE)

(56) Entgegenhaltungen:
- EP-A- 1 134 399
- WO-A-01/88359
- FOERSTNER D ET AL: "FAULT DETECTION OF A DIESEL INJECTION SYSTEM BY QUALITATIVE MODELLING" IFAC WORKSHOP ON ADVANCES IN AUTOMOTIVE CONTROL, KARLSRUHE, 2001, 28. März 2001 (2001-03-28), Seiten 273-279, XP001032729

## Beschreibung

### Stand der Technik

Die Erfindung betrifft ein Verfahren und eine Vorrichtung zur Überwachung von Systemen in Kraftfahrzeugen wie z.B. Brennstoffeinspritzsystemen und elektrischen Lenk- und Bremssystemen.

Solche Kraftfahrzeugsysteme bestehen aus mechanischen Komponenten und Steuerungsvorrichtungen, die Eingangsgrößen, oder Stellgrößen, für das System vorgeben, und als eine Funktionseinheit wirken. Das System reagiert auf diese Eingangsgrößen mit Ausgangsgrößen, die zumeist durch Sensoren bestimmt werden. Charakteristisch ist jedoch, dass aus Kostengründen meist nur wenige Ausgangswerte zur Verfügung stehen. Diese Sensoren und die Steuervorrichtungen erlauben durch die von den Sensoren zur Verfügung gestellten Messwerte sowie die in den Steuervorrichtungen zur Verfügung stehende Rechenleistung eine Systemüberwachung während des Betriebs des Fahrzeugs. Dadurch kann eine Fehlfunktion, die die Sicherheit des Kraftfahrzeugbetriebs gefährden könnte, wie etwa bei einem Fehler in einem Antiblockiersystem, oder die zu unzulässigen Umweltbelastungen führt, wie etwa bei einem Fehler in einem Brennstoffeinspritzsystem, erkannt und dem Fahrer ein geeigneter Hinweis gegeben werden. Wenn weiterhin die Art des Fehlers ermittelt werden kann, ist es möglich, durch ein Notprogramm eine eingeschränkte Betriebsbereitschaft aufrechtzuerhalten, etwa mit einer verminderten Motorleistung, oder einem abgeschalteten Antiblockiersystem.

Es ist bekannt, zur Überwachung von derartigen Kraftfahrzeugsystemen gemessene Signale oder Ausgangsgrößen auf die Einhaltung von Signalgrenzwerten zu überprüfen und anhand von Stellgrößensignalen oder Eingangsgrößen auf ihre Plausibilität zu überprüfen. Wenn ein Grenzwert überschritten wird, erfolgt eine Alarmmeldung, und eine eigenständige oder in die Steuervorrichtung integrierte Diagnosevorrichtung kann Fehler erkennen und gegebenenfalls Fehlerarten unterscheiden. Wenn hierbei mehr als zwei Signale gemeinsam ausgewertet werden sollen, bieten Modellbasierte Verfahren, bei denen das Modell das Eingangs-Ausgangs-Verhalten des Systems wiedergibt, Vorteile. Es wird überprüft, ob an dem Kraftfahrzeugsystem gemessene Ausgangssignale den bei vorgegebenen Eingabesignalen nach dem Modell zu erwartenden Werten entsprechen, oder gegebene Grenzwerte über- oder unterschreiten.

Wenn darüber hinaus neben einem Modell des zu erwartenden richtigen Verhaltens des Kraftfahrzeugsystems auch Modelle für das unter bestimmten Fehlerbedingungen zu erwartende Verhalten vorliegen, können bestimmte Fehler erkannt und lokalisiert werden.

Nachteilig an dem dargelegten Stand der Technik ist, dass der Rechenaufwand für die Verarbeitung der gegebenen quantitativen Signale erheblich ist. Es ist somit sehr aufwendig, dies in Echtzeit zu bewirken.

Aus der Druckschrift "Fault-detection of a diesel injection system by qualitative modelling", D. Förstner, J. -Lunze, 3rd IFAC Workshop Advances in Automotive Control, S. 273-279, Karlsruhe, 2001, ist ein Verfahren zur Onboard-Diagnose bekannt, das ein Modell-basiertes Diagnoseverfahren mit einem qualitativen Modellierungsansatz kombiniert. Quantitative Eingabe- und Ausgabesignale eines dynamischen Systems werden in qualitative Werte umgesetzt. Hierzu ist eine Reihe von Schwellenwerten bis zu einem maximalen Wert für das quantitative Signal vorgegeben. Jedes der dadurch entstehenden Intervalle wird einem qualitativen Wert zugeordnet. Wenn ein qualitativer Wert sich ändert, folglich der zu Grunde liegende quantitative Wert einen der Schwellenwerte überschreitet, wird ein Ereignis ausgelöst. Aus den Ereignissen wird eine Ereignisabfolge gebildet. Diese Ereignisfolgen werden mit einem vollständigen Modell von Ereignisfolgen verglichen. Ein vollständiges Modell weist alle möglichen Ereignisabfolgen auf. Anhand des Modells kann der Zustand des dynamischen Systems bewertet werden.

Nachteilig an dem aus der Druckschrift bekannten Diagnoseverfahren ist, dass viele Modelle möglichen Fehlerverhaltens unvollständig sind und daher nicht verwendet werden können. Durch hochfrequente Signalanteile und Rauschen in der Nähe von Schwellwerten können Ereignisse sehr schnell aufeinander folgen. Dadurch wird unnötig Rechenleistung beansprucht, ohne dass hieraus Informationen gewonnen werden können.

Es wurde erkannt, dass es ausreichend ist, ein vollständiges Modell für den Normalfall, der dem ordnungsgemäßen Betrieb entspricht, zu entwickeln. Die Fehlermodelle können dagegen unvollständig sein. Da viele Verfahren zur Gewinnung von Modellen zu unvollständigen Modellen führen, vereinfacht sich der Aufwand für die Erzeugung des Modells.

Das erfindungsgemäße Verfahren nach dem Anspruch 1 und die Überwachungsvorrichtung nach dem Anspruch 9, die das Verfahren nach Anspruch 1 nutzt. Vergleichen zumindest zwei aufeinander folgende Ergebnisse des Vergleichens wiederum miteinander. Bei der Bestimmung, ob ein Fehler, oder ein Normalfall vorliegt, wird dieser Vergleich berücksichtigt. Dadurch kann z.B. für den Fall, dass unmittelbar aufeinander folgend zwei verschiedene Fehler als Ergebnis bestimmt werden, nur ein unbestimmter Fehler als Ergebnis ausgegeben werden. Wenn der Fall einer Änderung des erkannten Fehlers weniger wahrscheinlich ist als der einer unrichtigen Fehlerbestimmung, kann es günstiger sein, einen undefinierten Fehler als Ergebnis zu erhalten. Wenn auf einen erkannten Fehler der Normalfall folgt, kann durch einen derartigen Vergleich erst dann auf den Normalfall erkannt werden, wenn er sich zumindest ein zweites Mal ergibt.

Durch die in den Unteransprüchen aufgeführten Maßnahmen sind vorteilhafte Weiterbildungen und Verbesserungen des im Anspruch 1 angegebenen Verfahrens und der in Anspruch 10 angegeben Überwachungsvorrichtung möglich.

Vorteilhaft wird im Schritt des Vergleichens mit Fehlermodellen verglichen, deren Ereignisabfolgen von den Ereignisabfolgen aller anderen Fehlermodelle und des Normalmodells unterscheidbar sind, und wird bei Übereinstimmung auf das Vorliegen eines bestimmten Fehlers erkannt. Für Fehlermodelle, die auf diese Weise eindeutig gebildet werden können, kann somit die Art des Fehlers bestimmt werden.

Zweckmäßigerweise wird auf das Vorliegen eines unbekannten Fehlers erkannt, wenn zumindest zwei Fehlermodelle oder das Normalmodell und zumindest ein weiteres Fehlermodell zugleich zutreffen. In diesem Fall, in dem die Fehlermodelle sich nicht korrekt ausschließen (dies kann sich durch die Art der Modellerzeugung ergeben) wird eine unbestimmte Fehlermeldung gegenüber einem Ergebnis, das zum Teil auf Zufälligkeiten beruht, bevorzugt.

Vorteilhaft wird als weiteres quantitatives Ausgangssignal die Zeit seit Eintritt eines Ereignisses erfasst. Hierdurch können auch Fehler, die sich durch ein abweichendes Zeitverhalten äußern, ohne zusätzlichen Aufwand erkannt werden, da keine Änderungen an Diagnosealgorithmen nötig sind.

Nach dem Schritt des Zuordnens der diskreten qualitativen Werte können mehrere qualitative Werte zu einem den ursprünglichen Werten eindeutig zuordnenbaren qualitativen Wert, insbesondere als gewichtete Summe, zusammengefasst werden. Da die qualitativen Werte hierdurch keinen Informationsgehalt verlieren, wenn die zusammengefassten Werte noch eindeutig zuordenbar sind, werden die nachfolgende Bildung der Ereignisabfolgen und die Auswertung vereinfacht.

Gemäß einer weiteren bevorzugten Ausführungsform des erfinderischen Verfahrens werden beim Schritt des Zuordnens die Schwellwerte des Werteintervalls, in dem der quantitative Wert bisher lag, um einen unteren Hysteresewert erniedrigt und um einen oberen Hysteresewert erhöht. Durch diese Maßnahme wird ein unerwünschtes schnelles Wechseln des qualitativen Wertes, wenn der quantitative Wert nahe an einem Schwellwert liegt, verhindert. Dazu kann es aufgrund von hochfrequenten Anteilen oder einem Rauschen in dem quantitativen Signal kommen.

Vorteilhaft kommt das Verfahren bei einem Kraftfahrzeugsystem zur Anwendung, das eine Brennstoffeinspritzvorrichtung für Verbrennungskraftmaschinen ist. Das Verfahren kann ebenfalls vorteilhaft bei einem Bremssystem oder einem By-Wire-System genutzt werden. Insbesondere By-Wire-Systeme, wie etwa eine Lenkung ohne mechanische Übertragung der Lenkbefehle oder ein Bremssystem, das keine direkte hydraulische Verbindung zwischen Bremspedal und Radbremsen aufweist, erfordern eine sichere Eigendiagnose.

### Zeichnungen

Ausführungsbeispiele der Erfindung sind in den Zeichnungen vereinfacht dargestellt und in der nachfolgenden Beschreibung näher erläutert. Es zeigt:
- Fig. 1: in einem Blockschaltbild das Zusammenwirken einer bevorzugten Ausgestaltung des erfindungsgemäßen Verfahrens mit einem Kraftfahrzeugsystem,
- Fig. 2: in einem Diagramm die Zuordnung qualitativer Werte mit einer Hysterese bei einem Ausführungsbeispiel des erfindungsgemäßen Verfahrens,
- Fig. 3: als Flussdiagramm einen Quantisierungsalgorithmus mit einer Hysterese,
- Fig. 4: als Flussdiagramm einen Konzentrationsalgorithmus,
- Fig. 5: als Blockdiagramm den Gesamtablauf des erfindungsgemäßen Verfahrens.
- Fig. 6: als Blockdiagramm den Teilablauf eines weiteren Ausführungsbeispiels des erfindungsgemäßen Verfahrens.

### Beschreibung der Ausführungsbeispiele

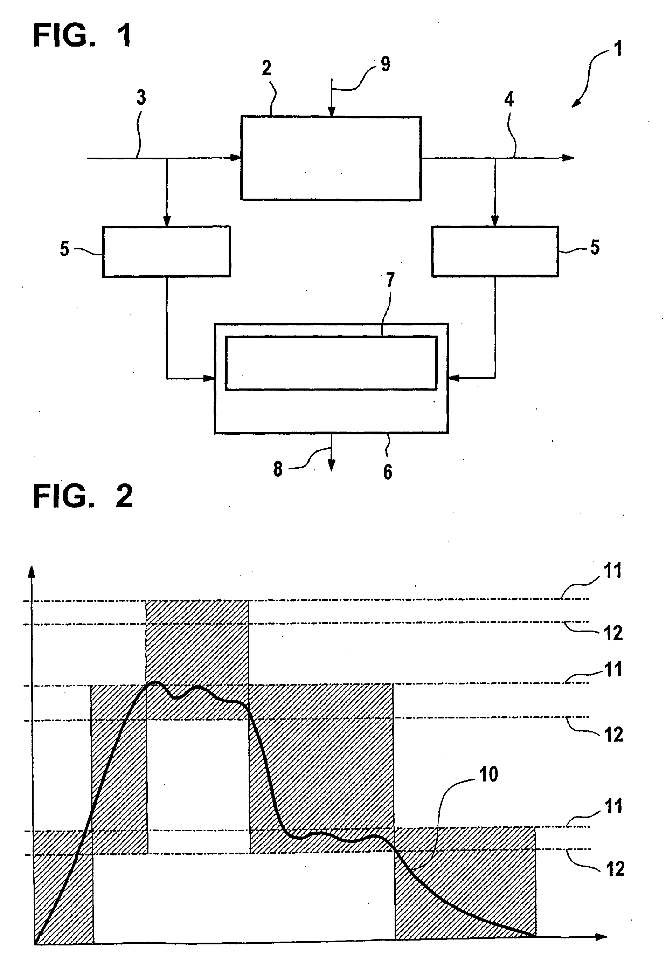

Fig. 1 zeigt in einem Blockschaltbild das Zusammenwirken eines erfindungsgemäßen Verfahrens mit einem Kraftfahrzeugsystem 1. Dieses weist ein im wesentlichen dynamisches System 2 auf, das aus mechanischen Komponenten, Mechatronic und/oder weiterer Steuerelektronik besteht. Das dynamische System 2 erhält Eingangssignale 3, die beispielsweise Stellsignale zur Regelung sind, wie etwa die Drucksteuerung bei einer Common-Rail-Einspritzung. Auf diese Eingangssignale 3 reagiert das dynamische System 2 mit Ausgangssignalen 4, die über Sensoren gewonnen werden. Sowohl Eingangssignale 3 als auch Ausgangssignale 4 werden über Quantisierer 5 an eine Steuervorrichtung 6 geleitet.

Nach den Quantisierern 5 liegen die Signale als qualitative Signale vor. In der Steuervorrichtung 6 sind ein oder mehrere Modelle 7 für das Verhalten des dynamischen Systems 2 abgespeichert. Im einfachsten Fall ist zumindest ein Modell 7 für den Normalfall vorhandenen, wenn das dynamische System 2 wie erwartet arbeitet. Die Werte und Änderungen der qualitativen Eingangssignale und Ausgangssignale werden mit den von dem Modell 7 vorhergesagten Werten von der Steuervorrichtung 6 verglichen und nach einer Bewertung als Ergebnis 8 ausgegeben.

Wenn ein Fehler 9 auf das dynamische System 2 einwirkt, verändern sich die Ausgangssignale 4, und die der Steuervorrichtung 6 zugeleiteten qualitativen Ausgabesignale entsprechen nicht mehr den von dem Modell 7 für den Normalfall vorhergesagten Werten und Änderungen.

Fig. 2 zeigt in einem Diagramm die Zuordnung qualitativer Werte mit einer Hysterese bei einer besonders vorteilhaften Ausführungsform des erfindungsgemäßen Verfahrens. Auf der Abszisse ist die Zeit aufgetragen und auf der Ordinate ein Signal, hier der gemessene Druck in einer Common-Rail-Einrichtung. Die durchgezogene Linie zeigt den Druckverlauf 10. Die gestrichelten, jeweils oberen Linien 11 stellen die jeweils um einen Hysteresewert erhöhten Schwellwerte und die gestrichelten, jeweils unteren Linien 12 die jeweils um einen Hysteresewert erniedrigten Schwellwerte dar. Dem quantitativen Druckverlauf 10 werden nacheinander fünf qualitative Werte zugewiesenen, die sich auf drei unterschiedliche Werte (1,2,3) verteilen. Die Bereiche der qualitativen Werte sind durch die senkrechten Linien an ihren zeitlichen Grenzen sowie durch die jeweils um die Hysteresen verschobenen Schwellenwerte 11,12 verdeutlicht.

In den zwei gut zu erkennenden Plateau-Bereichen des Druckverlaufs 10 schwankt dieser, so dass ohne die um die Hysterese verschobenen unteren Schwellenwerte 12 und die oberen Schwellenwerte 11 der zugeordnete qualitative Wert sich mehrfach ändern würde.

Eine weiter gehende Anpassung ist möglich, wenn jedem der Schwellenwerte ein anderer unterer bzw. oberer Hysteresewert zugeordnet wird.

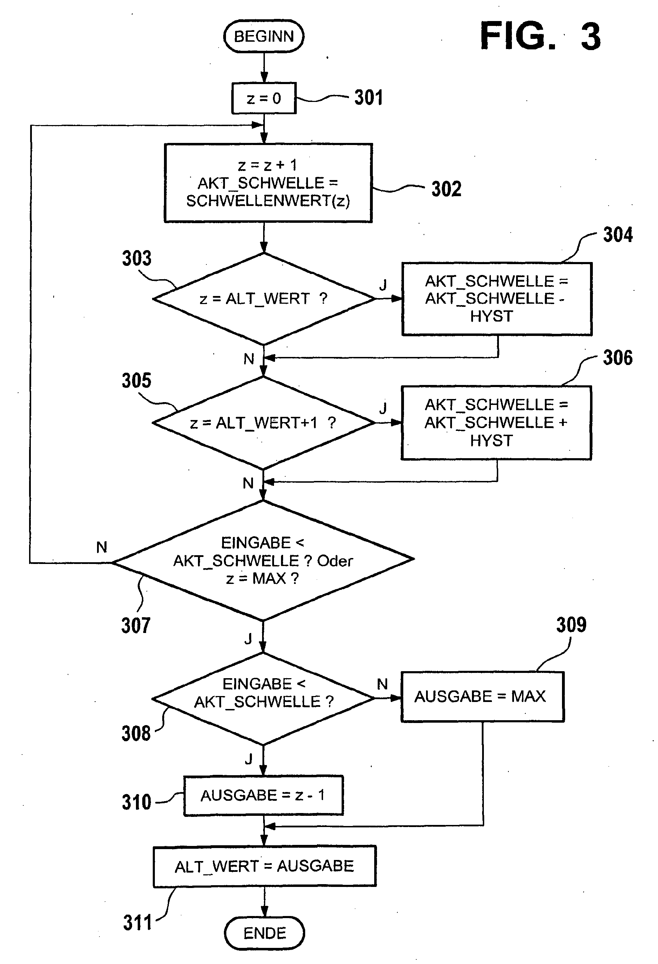

Fig. 3 zeigt als Flussdiagramm einen Quantisierungsalgorithmus unter Verwendung von Hysteresewerten. In einem ersten Schritt 301 wird ein Zähler z mit Null initialisiert. In einem weiteren Schritt 302 wird der Zähler z um eins hoch gezählt und der Variablen AKT_SCHWELLE der Wert des zum Zähler z gehörenden Schwellenwerts zugewiesenen. In einer Abfrage 303 wird der Zähler z mit einem Wert ALT_WERT verglichen. Stimmen die Werte überein, wird in einem Schritt 304 die aktuelle Schwelle um einen Hysteresewert vermindert. Dadurch wird für den Fall, dass der zu quantisierende Wert bisher oberhalb des aktuellen Schwellenwerts lag und nun unterhalb dieses Wertes liegen könnte, eine Hysterese des unteren Schwellenwerts erreicht. Wenn für verschiedene Werte des in der Variablen AKT_SCHWELLE abgelegten Schwellenwertes unterschiedliche Hysteresewerte verwendet werden sollen, so muss in dem Schritt 304 ein von dem Zähler z abhängiger Hysteresewert abgezogen werden.

In einer nachfolgenden Abfrage 305 wird der Zähler z mit einem um eins erhöhten Wert ALT_WERT verglichen. Stimmen die zu vergleichenden Werte überein, so wird in einem Schritt 306 der aktuelle Schwellenwert um einen Hysteresewert erhöht. Dadurch wird für den Fall, dass der zu quantisierende Wert bisher unterhalb der aktuellen Schwelle lag und nun oberhalb dieser Schwelle liegen könnte, eine Hysterese des oberen Schwellenwerts erreicht. In dem Schritt 306 muss ein von dem Zähler z abhängiger Hysteresewert addiert werden, wenn für jeden Schwellenwert andere Hysteresewerte verwendet werden sollen.

In einer nachfolgenden Abfrage 307 wird überprüft, ob die Eingabe kleiner ist als der aktuelle Schwellenwert AKT_SCHWELLE, oder ob der Zähler z einem Maximalwert entspricht. Trifft dies nicht zu, so erfolgt ein Rücksprung zu Schritt 302. In einer weiteren Abfrage 308 wird wiederum überprüft, ob die Eingabe kleiner ist als die Variable AKT_SCHWELLE. Trifft dies nicht zu, so wird in dem Schritt 309 der Ausgabe ein Maximalwert der qualitativen Werte zugewiesenen. Dies entspricht dem Fall, dass die Eingabe größer ist als der maximale quantitative Wert. Im anderen Fall wird in Schritt 310 der Ausgabe der Wert z-1 als qualitativer Wert zugewiesen. Zuletzt wird in einem Schritt 311 die Variable ALT_WERT mit dem nun aktuellen qualitativen Wert belegt.

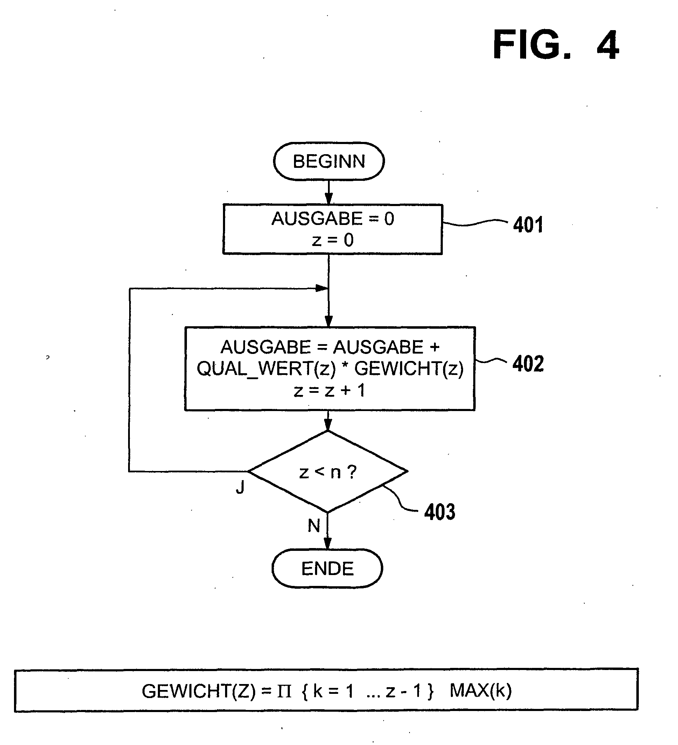

Fig. 4 zeigt in einem Flussdiagramm einen Konzentrationsalgorithmus, der aus n qualitativen Werten einen einzigen qualitativen Wert bildet, indem er eine Summe aus den gewichteten n qualitativen Werten bildet. In einem ersten Schritt 401 werden eine Variable AUSGABE und ein Zähler z mit Null initialisiert. In einem nachfolgenden Schritt 402 wird der Zähler z um eins hoch gezählt und zu der Variablen AUSGABE der qualitative Wert QUAL_WERT(z) multipliziert mit einer Gewichtungsfunktion GEWICHT(z) addiert. In einer Abfrage 403 erfolgt solange, wie der Zähler z kleiner als die Anzahl n der qualitativen Werte QUAL_WERT ist, ein Rücksprung zu Schritt 402. Der sich ergebende Ausgabewert des Algorithmus ist für eine Menge an qualitativen Eingabewerten jeweils eindeutig. Dies wird zum Beispiel erreicht, wenn die Gewichtungsfunktion für den n-ten qualitativen Wert das Produkt aus allen maximalen qualitativen Werten von 1 bis n-1 ist.

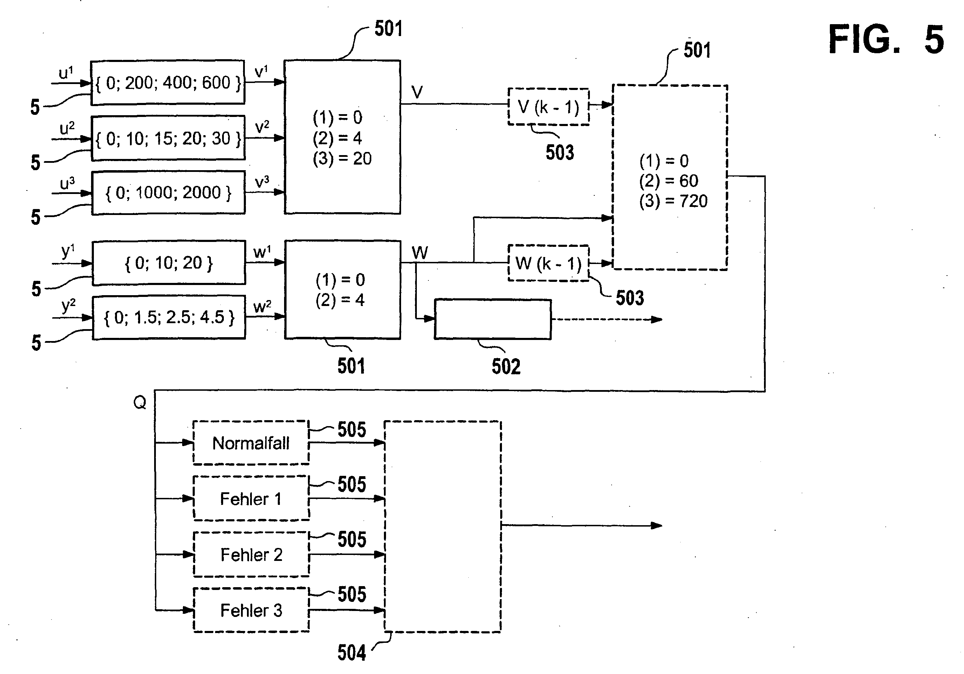

Fig. 5 zeigt als Blockdiagramm den Gesamtablauf des erfindungsgemäßen Verfahrens. Das Ausführungsbeispiel des erfindungsgemäßen Verfahrens verwendet drei Eingangssignale u1, u2, u3 und zwei Ausgangssignale y1, y2. Die Eingangssignale u1,u2,u3 werden in Quantisierern 5 in qualitative Signale v1,v2,v3 umgesetzt. Die Quantisierer 5 benutzen hierzu den in Fig. 3 erläuterten Algorithmus. Die in Klammern in den Quantisierern angegebenen Zahlenfolgen stellen jeweils mit Null beginnend die Abfolge der Schwellenwerte dar. Ebenso werden die Ausgangssignale y1,y2 in Quantisierern 5 in qualitative Signale w1,w2 umgesetzt.

Die drei qualitativen Eingangssignale v1,v2,v3 werden in einem Konzentriererblock 501, in dem ein Algorithmus nach der Fig. 4 abläuft, zu einem einzigen qualitativen Eingangssignal V zusammengefasst. Die drei angegebenen Werte geben die jeweils dem Zähler z zugeordneten Gewichtungswerte an. Ebenso werden die qualitativen Ausgangssignale w1,w2 in einem Konzentriererblock 501 zu einem qualitativen Wert bzw. Ausgangssignal W zusammengefasst. Auch hier sind die Gewichtungswerte angegeben.

Bei dem vorliegenden Beispiel werden Ereignisse als ein Wechsel eines qualitativen Wertes bei dem qualitativen Ausgangssignal W von einem Ereignisdetektor 502 erfasst. Der Ereignisdetektor 502 erkennt ein Ereignis als einen Wechsel des qualitativen Wertes W. Wenn ein Ereignis auftritt, werden der qualitative Wert W, dessen bisheriger Wert W (k-1) und der bisherige qualitative Wert V(k-1) an einen weiteren Konzentriererblock 501 geleitet. Dabei werden die bisherigen Werte W (k-1), V(k-1) in Schieberegistern 503 gespeichert.

Sämtliche in Fig. 5 in gestrichelter Linie dargestellten Blöcke sind ereignisgetriggert, d. h. sie werden erst aktiv, wenn der Ereignisdetektor 502 ein Ereignis meldet. Aus den drei qualitativen Werten W, W(k-1) und V(k-1), die durch ihre Reihenfolge auch eine Ereignisabfolge speichern, wird eine skalare Bewertungsgröße Q gebildet. Die Bewertungsgröße Q wird nacheinander von einem Testblock 505 mit einem Modell für den Normalfall und drei Testblöcken 505 mit Modellen für Fehlerfälle auf Übereinstimmung geprüft.

In dem vorliegenden Beispiel besitzt das Verfahren demnach drei Fehlermodelle. Da hier nur noch auf Übereinstimmung mit einer skalaren Größe Q und nicht mit Tupeln getestet werden muss, können die möglichen Werte in den Modellen sortiert werden und es kann logarithmisch gesucht werden, ob Q im jeweiligen Modell enthalten ist.

In einem Auswerteblock 504 erfolgt eine Bewertung des Ergebnisses. Schließlich wird ein Fehlerstatus ausgegeben. Dies ist in dem vorliegenden Beispiel ein Vektor, bei dem von jedem Testblock, in dessen Modell Q enthalten ist, ein Bit gesetzt wird. In dem Auswerteblock 504 kann zum Beispiel, wenn zuvor ein Fehlermodell zutraf, auch wenn jetzt das Normalfallmodell auf den Wert Q zutrifft, weiterhin ein Fehler gemeldet werden, bis mindestens zweimal hintereinander das Normalfallmodell zutrifft.

Falls keiner der Testblöcke eine Übereinstimmung meldet, wird ein unbestimmter Fehler als Fehlerstatus ausgegeben. Indem die zeitlich aufeinander folgenden Ergebnisse des Schrittes des Vergleichens für die Auswertung und Fehlerbestimmung benutzt werden, kann beispielsweise auch, wenn zunächst ein Fehler A sich als Ergebnis des Vergleichens und direkt folgend ein Fehler B ergibt, dennoch auf einen undefinierten Fehler erkannt werden. Es können somit angepasste Regeln für die Fehlererkennung aufgestellt werden, z.B., dass nach einem unbestimmten Fehler wieder direkt in den Normalzustand zurückgekehrt werden kann, nach einem bestimmten Fehler jedoch zumindest ein zweites Mal sich bei dem Vergleich das Normalmodell ergeben muss, bevor auf das Vorliegen des Normalzustandes erkannt wird.

Durch das beschriebene, eine zweifache Zusammenfassung einsetzende Verfahren wird die Weiterverarbeitung erheblich vereinfacht. Durch die Hysterese in den Quantisierern 5 werden unnötig häufig auftretende Ereignisse vermieden. Durch das Betrachten der Abfolge der Ergebnisse des Vergleichens in dem Auswerteblock 504 können kurzzeitig auftretende Fehler gehandhabt werden.

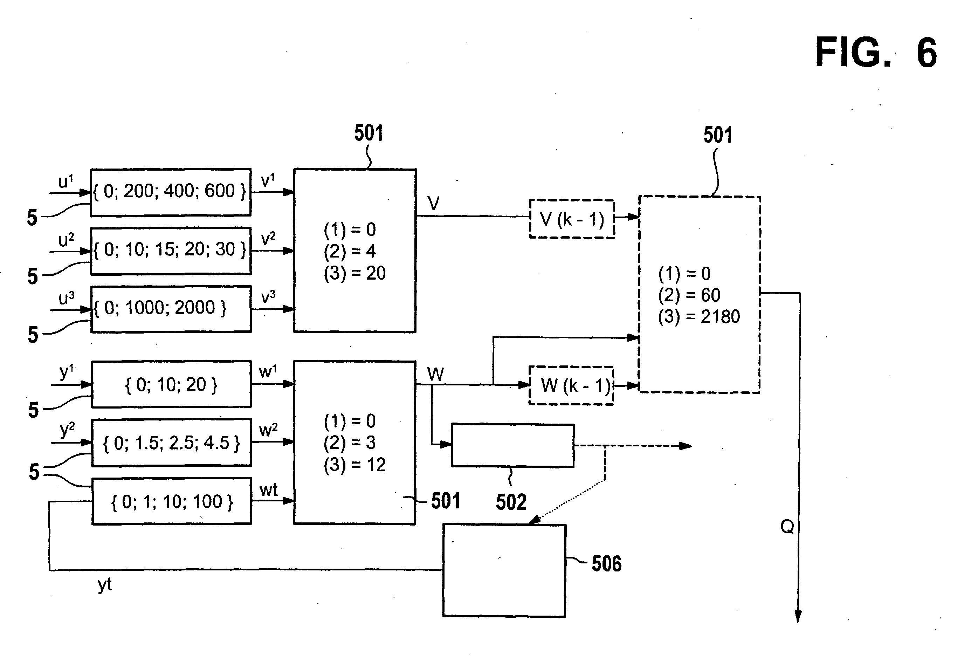

In Fig. 6 ist ein Blockdiagramm dargestellt, das den Teilablauf eines weiteren Ausführungsbeispiels des erfindungsgemäßen Verfahrens zeigt. Soweit das Verfahren von demjenigen des Ausführungsbeispiels in Fig. 5 nicht abweicht, werden dieselben Bezugszeichen verwendet.

Das Verfahren verwendet Eingangssignale u1, u2, u3 und Ausgangssignale y1, y2. Die Eingangssignale u1,u2,u3 werden in den Quantisierern 5 in qualitative Signale v1,v2,v3 umgesetzt. Ebenso werden die Ausgangssignale y1, y2 in Quantisierern 5 in qualitative Signale w1,w2 umgesetzt.

Zusätzlich ist ein weiteres Ausgangssignal yt vorhanden, dass in das qualitative Ausgangssignal wt umgesetzt wird. Die qualitativen Eingangssignale v1,v2,v3 werden in einem Konzentriererblock 501, in dem ein Algorithmus nach der Fig. 4 abläuft, zu einem einzigen qualitativen Eingangssignal V zusammengefasst. Die drei angegebenen Werte geben die jeweils dem Zähler z zugeordneten Gewichtungswerte an. Ebenso werden die qualitativen Ausgangssignale w1,w2, wt in einem Konzentriererblock 501 zu einem qualitativen Wert W zusammengefasst. Auch hier sind die Gewichtungswerte angegeben. Auch die Bildung des skalaren Wertes Q erfolgt wie bereits oben beschrieben. Im Unterschied zu dem Ausführungsbeispiel in der Fig. 5 gibt der Ereignisdetektor 502 ein Signal an einen Rücksetzblock, der einen Timer auf Null setzt. Die ablaufende Zeit t wird dann als das erwähnte weitere Ausgangssignal yt genutzt.

Hierdurch können auch Zeitüberschreitungen und - unterschreitungen als Fehler erkannt werden. Insbesondere muss das Verfahren zur Erfassung derartiger Zeitfehler nicht wesentlich abgeändert werden, da die Weiterverarbeitung des Ausgangssignals yt analog zu der Verarbeitung aller anderen Eingangs- oder Ausgangssignale erfolgt. Die Weiterverarbeitung der Bewertungsgröße Q entspricht derjenigen des Ausführungsbeispiels gemäß Fig. 5 und ist daher hier nicht weiter ausgeführt.

### Bezugszeichenliste

- 1: Kraftfahrzeugsystem
- 2: dynamisches System
- 3: Eingabegrößen
- 4: Ausgabegröße
- 5: Quantisierer
- 6: Steuervorrichtung
- 7: Modell
- 8: Ergebnis
- 9: Fehler
- 10: Druckverlauf
- 11: obere Linie
- 12: untere Linie
- 301: Schritt
- 302: Schritt
- 303: Abfrage
- 304: Schritt
- 305: Abfrage
- 306: Schritt
- 307: Abfrage
- 308: Abfrage
- 309: Schritt
- 310: Schritt
- 311: Schritt
- 401: Schritt
- 402: Schritt
- 403: Abfrage
- 501: Konzentriererblock
- 502: Ereignisdetektor
- 503: Schieberegister
- 504: Auswerteblock
- 505: Testblock
- 506: Rücksetzblock

- u1, u2, u3: Eingangssignale
- y1, y2, yt: Ausgangssignale
- v1,v2, v3: qualitative Eingangssignale
- w1, w2, wt: qualitative Ausgangssignale in
- V, W, Q: zusammengefasste Größen

## Patentansprüche

1. Verfahren zur Überwachung von Kraftfahrzeugssystemen (1), die mechanische Komponenten und zumindest eine Steuervorrichtung (6) aufweisen, mit folgenden Schritten:
- Erfassen von das Betriebsverhalten des Kraftfahrzeugsystems charakterisierenden Eingangs- (u1,u2,u3) und Ausgangssignalen (y1, y2) als quantitative Signale,
- Zuordnen von diskreten qualitativen Werten zu Werteintervallen der Eingangs-(u1,u2,u3) und Ausgangssignale (y1, y2), die durch eine jeweilige Abfolge von Schwellenwerten bis zu einem Maximalwert für die Eingangs- (u1,u2,u3) und Ausgangssignale (y1, y2) festgelegt werden,
- Erfassen der Änderung wenigstens eines der qualitativen Werte als Ereignis,
- Speichern von aufeinander folgenden Ereignissen als wenigstens eine Ereignisabfolge,
- Vergleichen der wenigstens einen gespeicherten Ereignisabfolge mit Modellen (7), die jeweils aus zumindest einer Ereignisabfolge bestehen, wobei
die wenigstens eine gespeicherte Ereignisabfolge mit einem Modell des Normalverhaltens des Kraftfahrzeugsystems, insbesondere bestehend aus allen Ereignisabfolgen des ordnungsgemäßen Betriebs des Kraftfahrzeugsystems (1), verglichen wird, und bei Übereinstimmung der wenigstens einen gespeicherten Ereignisabfolge mit dem Modell des Normalverhaltens auf einen ordnungsgemä-ßen Betrieb des Kraftfahrzeugsystems, bzw. bei Nicht-Übereinstimmung auf einen fehlerhaften Betrieb geschlossen wird, **dadurch gekennzeichnet, dass** zumindest zwei aufeinander folgende Ergebnisse des Vergleichens miteinander verglichen werden und bei der Bestimmung, ob ein Fehler, oder ein Normalfall vorliegt, dieser Vergleich berücksichtigt wird.

2. Verfahren nach Anspruch 1, **dadurch gekennzeichnet,**
**dass** die wenigstens eine gespeicherte Ereignisabfolge mit wenigstens einem Fehlermodell des Kraftfahrzeugsystems, insbesondere bestehend aus wenigstens einer Ereignisabfolge, die einem bestimmten Fehler eindeutig zuordenbar ist, verglichen wird, und bei Übereinstimmung auf das Vorliegen des bestimmten Fehlers erkannt wird.

3. Verfahren nach Anspruch 1 oder 2, **dadurch gekennzeichnet, dass** im Falle der Übereinstimmung der gespeicherten Ereignisabfolge mit den Ereignisabfolgen mehr als eines Fehlermodells, oder den Ereignisabfolgen des Normalmodells und den Ereignisabfolgen zumindest eines Fehlermodells, auf das Vorliegen eines undefinierbaren bzw. unbekannten Fehlers erkannt wird.

4. Verfahren nach einem der Ansprüche 1 bis 3, **dadurch gekennzeichnet, dass** als weiteres quantitatives Ausgangssignal (ty) die Zeit seit Eintritt eines Ereignisses erfasst wird.

5. Verfahren nach einem der Ansprüche 1 bis 4, **dadurch gekennzeichnet, dass** nach dem Schritt des Zuordnens der diskreten qualitativen Werte mehrere qualitative Werte (w1, w2, v1,v2, v3) zu einem den ursprünglichen Werten eindeutig zuordenbaren qualitativen Wert (V, W, Q) zusammengefasst werden.

6. Verfahren nach Anspruch 5, **dadurch gekennzeichnet, dass** die qualitativen Werte als gewichtete Summe zusammengefasst werden.

7. Verfahren nach Anspruch 5 oder 6, **dadurch gekennzeichnet, dass** die qualitativen Eingangssignale (v1,v2, v3) und die qualitativen Ausgangssignale (w1, w2) jeweils zusammengefasst werden.

8. Verfahren nach einem der Ansprüche 1 bis 7, **dadurch gekennzeichnet, dass** beim Schritt des Zuordnens die Schwellwerte des bisherigen Werteintervalls um einen unteren Hysteresewert erniedrigt und um einen oberen Hysteresewert erhöht werden.

9. Überwachungsvorrichtung für Kraftfahrzeugssysteme (1) mit mechanischen Komponenten und mit zumindest einer Steuervorrichtung (6), in der ein Verfahren nach einem der Ansprüche 1 bis 8 abläuft.

10. Überwachungsvorrichtung nach Anspruch 9, **dadurch gekennzeichnet, dass** das Kraftfahrzeugsystem (1) ein Erennstoffeinspritzsystem für Verbrennungskraftmaschinen oder ein Bremssystem oder ein By-Wire-System ist.

## Claims

1. Method for monitoring motor vehicle systems (1) which have mechanical components and at least one control device (6), having the following steps:
- detecting input signals (u1, u2, u3) and output signals (y1, y2) characterizing the operating behaviour of a motor vehicle system, as qualitative signals,
- assigning discrete qualitative values to value intervals of the input signals (u1, u2, u3) and output signals (y1, y2) which are defined by a respective sequence of threshold values up to a maximum value for the input signals (u1, u2, u3) and output signals (y1, y2),
- detecting the change in at least one of the qualitative values as event,
- storing consecutive events as at least one event sequence, and
- comparing the at least one stored event sequence with models (7) which consist respectively of at least one event sequence,
- the at least one stored event sequence being compared with a model of the normal behaviour of the motor vehicle system, in particular consisting of all the event sequences of the proper operation of the motor vehicle system (1), and a proper operation of the motor vehicle system being inferred in the event that the at least one stored event sequence corresponds to the model of the normal behaviour, and/or an improper operation is inferred in the event of noncorrespondence,
**characterized in that**
at least two consecutive results of the comparison are compared with one another and this comparison is considered when determining whether a fault or a normal case is present.

2. Method according to Claim 1, **characterized in that** the at least the one stored event sequence is compared with at least one fault model of the motor vehicle system, in particular consisting of at least one event sequence which can be assigned to a specific fault, and the presence of the specific fault is acknowledged in the event of correspondence.

3. Method according to Claim 1 or 2, **characterized in that** the presence of an undefinable or unknown fault is acknowledged in the case when the stored event sequence corresponds to the event sequences of more than one fault model, or the event sequences of the normal model and the event sequences of at least one fault model.

4. Method according to one of Claims 1 to 3, **characterized in that** the time since the occurrence of an event is detected as further qualitative output signal (ty).

5. Method according to one of Claims 1 to 4, **characterized in that** after the step of assigning the discrete qualitative values, a number of qualitative values (w1, w2, v1, v2, v3) are combined to form a qualitative value (V, W, Q) which can be uniquely assigned to the original values.

6. Method according to Claim 5, **characterized in that** the qualitative values are combined as a weighted sum.

7. Method according to Claim 5 or 6, **characterized in that** the qualitative input signals (vl, v2, v3) and the qualitative output signals (w1, w2) are respectively combined.

8. Method according to one of Claims 1 to 7, **characterized in that** in the assignment step the threshold values of the previous value interval are lowered by a lower hysteresis value and raised by an upper hysteresis value.

9. Monitoring apparatus for motor vehicle systems (1), having mechanical components and having at least one control device (6) in which a method according to one of claims 1 to 8 runs.

10. Monitoring apparatus according to Claim 9, **characterized in that** the motor vehicle system (1) is a fuel injection system for internal combustion engines, or a brake system, or a by-wire system.

## Revendications

1. Procédé de surveillance de systèmes de véhicules automobiles (1) ayant des composants mécaniques et au moins un dispositif de commande (6) comprenant les étapes suivantes :
- saisie des signaux d'entrée (u1, u2, u3) et des signaux de sortie (y1, y2) comme signaux quantitatifs caractérisant le comportement de fonctionnement du système de véhicule,
- association de valeurs qualitatives discrètes à des intervalles de valeurs des signaux d'entrée (u1, u2, u3) et des signaux de sortie (y1, y2) qui sont été fixées par la succession respective des valeurs de seuil jusqu'à une valeur maximale pour les signaux d'entrée (u1, u2, u3) et les signaux de sortie (y1, y2),
- saisie de la variation d'au moins l'une des valeurs qualitatives comme événement,
- mémorisation d'événements successifs comme au moins une succession d'événements,
- comparaison d'au moins une succession d'événements mémorisés à des modèles (7) composée d'au moins une succession d'événements,
- au moins une succession d'événements mémorisés étant comparée à un modèle du comportement normal du système de véhicule, notamment composé de toutes les successions d'événements du fonctionnement normal du système de véhicule (1), et en cas de concordance entre au moins une succession d'événements mémorisés et le modèle du comportement normal, on conclut à un fonctionnement correct du système de véhicule ou en cas de non concordance on conclut à un fonctionnement défectueux,
**caractérisé en ce qu'**
on compare entre eux au moins deux résultats successifs de comparaisons et on tient compte de cette comparaison pour déterminer si l'on est en fonctionnement normal ou s'il y a un défaut.

2. Procédé selon la revendication 1,
**caractérisé en ce qu'**
au moins une succession d'événements mémorisés est comparée à au moins un modèle de défaut du système de véhicule automobile composé notamment d'au moins une succession d'événements qui sont associés sans équivoque à un certain défaut et en cas de concordance on reconnaît l'existence de ce défaut déterminé.

3. Procédé selon la revendication 1 ou 2,
**caractérisé en ce qu'**
en cas de concordance entre la succession d'événements mémorisés et la succession d'événements de plus d'un modèle de défaut ou des successions d'événements du modèle normal et des successions d'événements d'au moins un modèle de défaut, on constate l'existence d'un défaut indéfini ou inconnu.

4. Procédé selon l'une des revendications 1 à 3,
**caractérisé en ce que**
comme autre signal de sortie quantitatif (ty), on saisit le temps écoulé depuis un événement.

5. Procédé selon l'une des revendications 1 à 4,
**caractérisé en ce qu'**
après l'étape d'association de valeurs quantitatives discrètes, on regroupe plusieurs valeurs qualitatives (w1, w2, v1, v2, v3) à l'une des valeurs qualitatives (V, W, Q) associées de manière univoque aux valeurs initiales.

6. Procédé selon la revendication 5,
**caractérisé en ce qu'**
on regroupe les valeurs qualitatives sous la forme d'une somme pondérée.

7. Procédé selon les revendications 5 ou 6,
**caractérisé en ce qu'**
on regroupe respectivement les signaux d'entrée qualitatifs (vl, v2, v3) et les signaux de sortie qualitatifs (w1, w2).

8. Procédé selon l'un des revendications 1 à 7,
**caractérisé en ce que**
dans l'étape d'association, on abaisse les valeurs de seuil de l'intervalle de valeur utilisé jusqu'alors d'une valeur inférieure d'hystérésis et on les augmente d'une valeur supérieure d'hystérésis.

9. Dispositif de surveillance de systèmes de véhicules (1) à composant mécanique et ayant au moins un dispositif de commande (6) mettant en oeuvre le procédé selon l'une des revendications 1 à 8.

10. Dispositif de surveillance selon la revendication 9,
**caractérisé en ce que**
le système de véhicule (1) est un système d'injection de carburant pour des moteurs à combustion interne ou un système de freins ou un système de commande par câble.
